Europäisches Patentamt

(19) European Patent Office

Office européen des brevets

(11) Publication number: **0 112 996**
**B1**

(12) **EUROPEAN PATENT SPECIFICATION**

(45) Date of publication of patent specification: 20.05.87

(21) Application number: 83110922.8

(22) Date of filing: 02.11.83

(51) Int. Cl.⁴: **C 05 F 9/04, C 05 F 7/02**

(54) **Process for production of an organic agricultural fertilizer and fertilizer obtained by said process.**

(30) Priority: 05.11.82 IT 6829482

(43) Date of publication of application:
**11.07.84 Bulletin 84/28**

(45) Publication of the grant of the patent:
**20.05.87 Bulletin 87/21**

(84) Designated Contracting States:
**AT BE CH DE FR GB LI LU NL SE**

(56) References cited:
**AU-B- 478 040**
**CH-A- 605 470**
**DE-A- 2 845 684**
**DE-C- 701 406**
**FR-A- 2 260 550**
**GB-A- 572 171**
**GB-A- 651 079**

**CHEMICAL ABSTRACTS, vol. 89, no. 15, 9th
October 1978, page 503, no. 128390g,
Columbus Ohio (USA); E.EPSTEIN et al.:
"Composting research and development"**

(73) Proprietor: **IPLA - ISTITUTO PER LE PIANTE DA
LEGNO E L'AMBIENTE S.p.A.
Corso Casale, 476
I-10132 Torino (IT)**

(72) Inventor: **Jodice, Roberto
Via Moncanino, 63 Bis
I-10099 San Mauro Torinese, Torino (IT)**

(74) Representative: **Prato, Roberto et al
c/o Ingg. Carlo e Mario Torta Via Viotti 9
I-10121 Torino (IT)**

Courier Press, Leamington Spa, England.

# 0 112 996

**Description**

The present invention relates to a process for the production of an organic agricultural fertilizer through biological transformation of organic waste sludges both of domestic and industrial origin.

It is well known that in many industries, such as textile, dairy, confectionary, tannery and pharmaceutical industries, operations are effected forming organic sludges, that constitute wastes of the processings themselves or of the purification installations of the service waters. Domestic installations, in particular the purification installations for foul waters by means of biological depurators, also produce a substantial quantity of residual organic sludges, that can not be used. The disposal of these industrial and domestic residual organic sludges represents a serious problem in that they are often polluting and can be charged with pathogenous germs and parasites.

In order to solve this problem a U.S. process is known from Chemical Abstracts, vol. 89, no. 15, 9th October 1978, page 503, no. 123890g that performs an aerobic fermentation of the sludges by means of a forced ventilation. The sludges are collected on gratings under which are placed fans, that force the air through the mass. Said process suffers however from serious drawbacks, the first of which is an unacceptable energetic and economic cost, due to the necessity of keeping the fans continuously operating for weeks.

Furthermore such a process gives rise to excessive oxygenation of the mass, equal or superior to 5%, causing the oxidation and the ensuing destruction of the most part of the organic substance contained in the sludges. At the end of said process, a residue is obtained in a low yield, which can be used as a fertilizer, but has poor agronomical properties. Furthermore, the air passing through the fermenting mass gets loaded with polluting gaseous products, and therefore has to be purified before the exhaust, with high additional costs.

An object of the present invention is to realize a process for the production of an organic agricultural fertilizer through biological transformation of domestic and industrial organic sludges devoid of the above-mentioned drawbacks. In particular it is aimed an economic process, with low consumption of energy, of relatively short duration, and fit to operate the transformation of any organic sludge without environmental pollution and to completely destroy the possibly pathogenous germs, simultaneously producing an organic fertilizer having agronomical properties.

Said object is attained by the present invention in that it relates to a process for the production of an organic agricultural fertilizer through biological transformation of organic waste sludges both of domestic and industrial origin, comprising a first step, in which said sludges are thoroughly mixed with a mechanical substrate formed from wooden splinters of woods having a high resistance to the biological attack and a biological inoculum, a second step of spontaneous fermentation of the mass obtained in said first step, said mass being arranged in heaps and a third step in which the fermented mass is screened in order to separate it in two components, one comprising said organic agricultural fertilizer, and the second formed by said mechanical substrate of wooden splinters, characterized in that the volume ratio between said sludges and said wooden splinters in said first step is equal or slightly less than 1; said heaps having an height between about 2 and 4 m, a length greater than or equal to 10 m, a width greater than or equal to 3 m, and being sheltered from the inclemency of the weather in a ventilated area at ambient temperature, said mass being periodically ventilated by means of a first turning over of said heaps after about 7 days from the start of said second step; a second turning over of said heaps after about 15 days from the first turning over; a third turning over of said heaps after about 20 days from the second turning over; the mass being allowed to rest for at least further 15 days from the third turning over; and the said third step being effected after about 60 days from the beginning of said second step, when the temperature of the fermenting mass stabilises at a constant value between about 30° and 35°C.

The present invention further relates to an organic fertilizer for the manuring of soils, characterized in that it has the following analytical composition expressed, except for the moisture, on the dry matter:

|                     | Min | Max |
| ------------------- | --- | --- |
| Moisture %          | 35  | 50  |
| pH                  | 6   | 8   |
| Ashes %             | —   | 60  |
| Organic matter %    | 40  | —   |
| Total nitrogen %    | 2   | 5   |
| Total phosphorus %  | 1   | 3   |
| K %                 | 0,1 | —   |

2

|  | Min | Max |
| --- | --- | --- |
| Total humus % | 4 | 8 |
| Humic acids % on total humus | 60 | — |
| Fulvic acids % on total humus | — | 40 |
| Pb ppm | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe % | — | 5 |

For a better understanding of the present invention, a non-limitative description of an embodiment will now be given with reference to the accompanying drawing, in which:

Figure 1 represents a qualitative graph of the course of the temperature of the fermenting mass; and

Figure 2 represents an operation of the process of the invention.

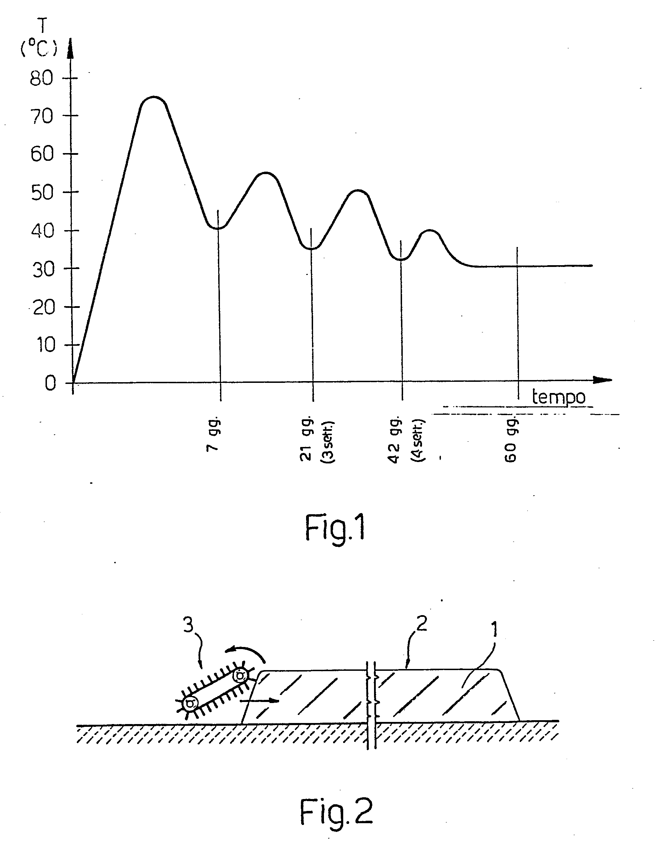

With reference to figure 2, the process comprises the biological transformation of the sludges through the spontaneous fermentation of a mass 1 formed by the sludges and a mechanical substrate of a kind biocompatible with the micro-organisms responsible for the fermentation. The mass 1 is collected in heaps 2 having predetermined sizes sheltered from the inclemency of the weather in a ventilated area at ambient temperature, for example on an outdoor asphalted surface covered with a shed.

According to the invention, the mass 1 is ventilated by the periodic turning over of each heap 2 using mechanical means, for example a turning over machine 3 with belt (or cutter) which is advanced in direction of the arrow against the heap 2 so as to crumble it and then to build it up again immediately downstream of the machine 3. In this way at the end of the turning over the heap 2 is transferred in an opposite direction to that of the advancement of the turning over machine 3 by a preset length. The size of the heaps must be the following: length higher than or equal to 10 m; width greater than or equal to 3 m; and depth between 2 and 4 m. The mechanical substrate is formed, according to the invention, from wooden splinters ("chips") of hard and/or resinous woods, having therefore a high content (percent) of lignin and so a high resistance to the biological attack, which are mixed with the sludges in an amount of 50% or somewhat more by volume, and must have the following dimensions: length higher than 5 cm; width about 3 cm; and thickness about 0,5 cm. The fermentation process of the mass 1 must last about 60 days and is discontinued when the temperature of the mass 1, measured at the center of the heat 2, stabilizes at a constant value in the range from 30° to 35°C. In order to obtain the complete destruction of the possible parasites and pathogenous germs contained in the sludges without the oxidative destruction of the organic matter contained in the same, we have surprisingly found, after years of experimental studies, that the fermentation must be carried on in microaerobic conditions, keeping the moisture of the mass 1 equal or lower than 50%; therefore the oxygen content of the mass 1, measured at the center of the heap 2 between a turning over and the following, must be always in the range from about 0,1% to about 0,5% and the $CO_2$ content must be in the range from 19 to 20%. Under these conditions there is no occurrence of an anaerobic fermentation and instead in the mass 1 grows many micro-organisms, comprising among other the thermophiles actinomyces and streptomyces and various strains of *Coprinus,* which find a support on the surface of the wooden splinters mixed with the sludges. The splinters moreover impart to the mass 1 a suitable porosity and consistence.

Three overturnings of the mass 1 are carried out, respectively, the first after about 7 days from the start of the fermentation; the second after about 15 days from the first turning over, and the third after about 20 days from the second turning over; the mass 1 is then left to rest in heaps for at least further 15 days after the third turning over. In such conditions the course of the temperature of the mass 1, noted experimentally, is as shown in the qualitative graph of figure 1. At the start of the fermentation step, the temperature of the mass 1 rises to values higher than 70°C and then decreases in a manner approximately sinusoidally damped, showing minima corresponding to each turning over and stabilising finally around 30°C after the 50th-55th day.

At the end of the fermentation of the mass 1, the starting sludges are completely transformed and have

3

produced an organic fertilizer also containing a certain quantity of the organic matter of the substrate formed by the wooden splinters. The latter are separated from the so obtained fertilizer by means of a screening operation of the mass 1, carried on for example with two vibrating screens serially arranged, and during which a portion of the wooden splinters is crumbled, due to the mechanical stresses, and goes to form a part of the end product. Then the fertilizer so obtained is stocked, in bulk or sacked. Before stocking, the end product can be subjected to a fifth step of drying the mass to lower its moisture from about 50% to about 35%. This can be conveniently done through thermal drying with combustion of bio-gas, which can be produced in a known way from organic wastes and/or from a portion of the sludges themselves used for the production of the fertilizer. For a proper course of the above-mentioned process, the sludges used as a raw material must have the average analytical properties tabulated in Table I. All the values presented in Table I are expressed on the dry matter, except for the moisture.

TABLE I
Analytical properties of the sludges

|  | Min | Max |
| --- | --- | --- |
| Moisture % | 50 | 85 |
| pH | 3,5 | 8,5 |
| Ashes % | 15 | 50 |
| Organic matter % | 50 | 85 |
| Total nitrogen % | 2 | 9 |
| Total phosphorous % | 0,5 | 2 |
| K % | 0,1 | — |
| Pb ppm | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe % | — | 5 |

According to the values shown in Table I, industrial sludges produced by the following industries are suitable for treatment by the process of the present invention: textile, dairy, confectionary, tannery, pharmaceutical; and further domestic sludges (residues of the installations for the biological purification) and decantation sludges (coming from the primary purification of the water for the water systems). Sludges having originally a composition different from that shown in Table I can also be treated with the process of the invention, provided they are mixed each other and/or supplemented with lignocellulosic residues (such as paper mill sludges) to bring the composition of the mixture of sludges so obtained in the range of values shown in Table I.

Small additions of lignocellulosic residues act anyhow as a coadjuvant for the development of the fermentation, even when the sludges composition is correct.

In order to assure that the fermentation of the mass 1 proceeds so as to obtain the desired end product, it is necessary not only to control the fermentation parameters (oxygen %, $CO_2$ %, temperature and moisture), but make sure that since the start the fermentation is produced by the growth of the most suited micro-organisms, such as for example the above-mentioned thermophilic mycetes. To this end, according to the invention, the mass 1 is prepared by means of a mixing operation immediately preceding the fermentation step in heaps 2, during which the sludges, having a composition according to Table I, are thoroughly mixed for example by means of turning over machines or concrete mixers, with said mechanical substrate formed from wooden splinters and with a biological inoculum. According to one

4

aspect of the invention the biological inoculum is formed by a weight portion of the substrate wooden splinters, which portion comprises the wooden splinters separated from the end product by means of the screening operation of the mass 1 at the end of the fermentation, as previously described.

In fact, according to one aspect of the invention, the described process is cyclic and comprises a fourth step of recycle of the wooden splinters separated from the fertilizer by means of the screening of the fermented mass 1. These are recovered and transferred to the beginning of the process (upstream of the mixing operation), where they are mixed with other fresh wooden splinters and new sludges, initiating in the latter the fermentation. It is indeed obvious that the chips separated from the end product at the end of the fermentation are loaded with colonies of microorganisms, well developed and active. Therefore, by mixing said chips with fresh sludges, an immediate attack of the latter is produced. Further we have surprisingly found that the micro-organisms carried by the chips are able to interrupt at the very beginning the possible development of undesired micro-organisms.

Essentially, the wooden splinters or chips are used as a mechanical substrate, in the same way as a catalyst that, having completed the reaction, is separated from the end product in order to be reused to convert a new quantity of starting material. As said previously, during the process of the invention, the wooden splinters undergo a loss of organic matter, which is degraded by the biological attack and by the mechanical crumbling of the wood and which passes into the fermenting sludges and the end product. This loss corresponds to about 1/4 of the initial weight of the support wooden splinters. Consequently to the splinters that are recycled to the beginning of the process, it is necessary to add fresh splinters to make up for the loss. Therefore the mechanical substrate which is added to the sludges to produce the mass 1, must have the following composition in weight:

— 1/4 of wooden splinters formed by cuttings produced by chopping trees (for example by means of shredding machines provided with bladed discs);

— 3/4 of wooden splinters coming from the mechanical substrate of a mass 1, which has already fermented, which splinters are separated from the end product of the degradation of the sludges by means of screening.

The analytical properties of the fertilizer obtained with the described process, starting from sludges having the composition according to Table I, are presented in Tables II and III, where all the values, except the moisture, are expressed on the dry matter.

# 0 112 996

TABLE II
Analytical properties of the end product

|  | Min | Max |
|---|---|---|
| Moisture % | 35 | 50 |
| pH | 6 | 8 |
| Ashes % | — | 60 |
| Organic matter % | 40 | — |
| Total nitrogen % | 2 | 5 |
| Total phosphorous % | 1 | 3 |
| K % | 0,1 | — |
| Total humus % | 4 | 8 |
| Humic acids % on total humus | 60 | — |
| Fulvic acids % on total humus | — | 40 |
| Pb ppm* | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe % | — | 5 |

(*ppm=parts per million)

TABLE III
Distribution of humic matter in fractions with different molecular mass

|  | Min | Max |
|---|---|---|
| Molecular mass<5000 (% on tot. humus) |  | 25 |
| 5000—10000 (% on tot. humus) | 30 | 40 |
| 10000—100000 (% on tot. humus) | 5 | 20 |
| >100000 (% on tot. humus) | 15 | 40 |

The organic fertilizer obtained with the described process is homogeneous, and incorporated in the soil increases its volume and the porosity. Several tests of manuring carried on soils for agricultural cultivation and in nurseries have shown that it presents good general agronomical properties. Furthermore it is especially rich in nitrogen and iron salts and has a content in humus with high molecular mass, and thence sufficient to increase the exchange capacity of the manured soils in a way to assure a complete utilization of the nitrogen present in the manure.

The manure obtained with the described process is devoid of parasites and/or pathogenous germs, and on the contrary is rich in micro-organisms suited to develop the growth of the cultivations. It further contains organic substances similar in composition and quantity with those normally present in fruitful

6

soils and assures therefore a "natural" manuring lending itself to the regeneration of unfruitful soils. The process of the invention enables consequently to obtain a new and valuable organic manure and in the same time to solve economically and without energetic waste the problem of the disposal of both domestic and industrial organic sludges, without pollution and damage for the environment.

It will be now described an example of the preparation of the organic manure according to the invention.

Example

45000 kg of sludges having an average composition as shown in Table I and a consistency equal to 1000 kg/m³ are mixed with

13500 kg of wooden splinters obtained from woods of broadleaf trees having densities in the range from 300 to 320 kg/m³; said wooden splinters are subdivided as follows:

3400 kg of fresh chips obtained shredding logs by means of a rotating cutter; and

10100 kg of recycled wooded splinters (chips), that have been separated through screening from 48000 kg of a fermentation product having the properties presented in Tables II and III and obtained with the process of the invention.

It is obtained a mass of 58500 kg which is subjected to fermentation in an outdoor surface under a shed, collected in a substantially parallelepiped heap having dimensions equal to 10×3×3 m. Already after 1 day the temperature of the mass at the center of the heap rises over 40°C and attains 75°C on the fourth day. After seven days the mass is turned over with a belt turning over machine and the temperature decreases to 40°C, and rises again to 55°C within further eight days. The oxygen content at the center of the heap is 0,3%. On the 21th day is carried on a second turning over, being the temperature lowered to 35°C. It rises again to 50°C while the moisture fluctuates between 45% and 50%, and descends to 32°C before the third turning over, carried on after 6 weeks from the start of the fermentation. Then the temperature rises again to 40°C and then descends spontaneously stabilising, between the 55th and the 60th day, to 30°C. After 60 days the fermentation is complete, the mass is screened separating two fractions formed the first by 10000 kg of wooden splinters, that are collected and utilized for the fermentation of further sludges, and the second by 48500 kg of a product having the following properties (expressed, except for the moisture, on the dry product).

| | |
|---|---|
| Moisture | 46% |
| Ashes | 40% |
| Organic matter | 55% |
| Iron | 4% |
| pH | 7 |
| Total humus | 7% |
| Humic acids | 70% |
| Fulvic acids | 30% |

**Claims**

1. A process for the production of an organic agricultural fertilizer through biological transformation of organic waste sludges both of domestic and industrial origin, comprising a first step, in which said sludges are thoroughly mixed with a mechanical substrate formed from wooden splinters of woods having a high resistance to the biological attack and a biological inoculum, a second step of spontaneous fermentation of the mass (1) obtained in said first step, said mass being arranged in heaps (2) and a third step in which the fermented mass (1) is screened in order to separate it into two components, one comprising said organic agricultural fertilizer, and the second formed by said mechanical substrate of wooden splinters characterized in that the volume ratio between said sludges and said wooden splinters in said first step is equal or slightly less than 1; said heaps having an height between about 2 and 4 m, a length greater than or equal to 10 m, a width greater than or equal to 3 m, and being sheltered from the inclemency of the weather in a ventilated area at ambient temperature, said mass (1) being periodically ventilated by means of a first turning over of said heaps (2) after about 7 days from the start of said second step; a second turning over of said heaps (2) after about 15 days from the first turning over; and a third turning over of said heaps (2) after about 20 days from the second turning over the mass (1) being allowed to rest for at least further 15 days from the third turning over; and the said third step being effected after about 60 days from the beginning of said second step, when the temperature of the fermenting mass (1) stabilises at a constant value between about 30° and 35°C.

7

2. A process according to claim 1, characterized in that it comprises a fourth step, in which said wooden splinters separated from said fertilizer by means of the third step, are recycled to the beginning of said first step, in order to constitute the biological inoculum, which is added to some new wooden splinters in order to form said mechanical substrate in the volume ratio required with respect to that of the sludges.

3. A process according to claim 2, characterized in that said mechanical substrate has, at the start of said first step, the following composition in weight:

— 1/4 of wooden splinters formed by cuttings produced by chopping trees;
— 3/4 of wooden splinters formed by said weight fraction separated from said third step and recycled through said fourth step; said mechanical substrate undergoing during said second and third steps a biological and mechanical attack, which involves a weight loss of organic matter equal to about 1/4, the organic matter lost by said mechanical substrate going first into said fermenting sludges and then into said fertilizer.

4. A process according to anyone of the preceding claims, characterized in that said wooden splinters are obtained from hard and/or resinous woods containing a high percentage of lignin, and have the following properties:

— thickness about 0,5 cm.
— width about 3 cm.
— length higher than 5 cm.

5. A process according to anyone of the preceding claims, characterized in that said organic sludges comprise lignocellulosic residues and have the following analytical properties expressed, except for the moisture, on the dry matter:

|  | Min | Max |
| --- | --- | --- |
| Moisture | 50 | 85 |
| pH | 3,5 | 8,5 |
| Ashes % | 15 | 50 |
| Organic matter % | 50 | 85 |
| Total nitrogen % | 2 | 9 |
| Total phosphorous % | 0,5 | 2 |
| K % | 0,1 | — |
| Pb ppm | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe % | — | 5 |

6. A process according to anyone of the preceding claims, characterized in that it comprises a fifth step, in which said fertilizer obtained after said third step is dried, in order to lower the moisture content of the latter from about 50% to about 35%.

**Patentansprüche**

1. Verfahren zur Herstellung eines organischen landwirtschaftlichen Düngers durch biologische Umwandlung organischer Abfallschlämme sowohl häuslichen als auch industriellen Ursprungs, umfassend einen ersten Schritt, in dem genannte Schlämme gründlich vermischt werden mit einem mechanischen Substrat, gebildet aus Holzsplittern aus Hölzern mit einer hohen Resistenz gegen biologische Angriffe und einer biologischen Impfmasse; einem zweiten Teilschritt spontaner Fermentation der Masse (1), erhalten im genannten ersten Schritt, diese wird in Haufen (2) angeordnet und einem dritten Teilschritt unterworfen, in welchem die fermentierte Masse (1) gesiebt wird, um sie in zwei Komponenten zu trennen, eine davon enthält den genannten organischen landwirtschaftlichen Dünger und die zweite besteht aus dem genannten mechanischen Substrat von Holzsplittern, dadurch gekennzeichnet, daß das Volumsverhältnis zwischen besagten Schlämmen und den Holzsplittern im genannten ersten Schritt gleich oder geringfügig weniger als 1 ist; genannte Haufen eine Höhe zwischen etwa 2 und 4 m, eine Länge größer oder gleich 10 m, eine Breite größer oder gleich 3 m haben, geschützt sind vor Witterungseinflüssen auf einer belüfteten Fläche bei Umgebungstemperatur, genannte Masse (1) periodisch belüftet wird durch eine erste Umwendung besagter Haufen (2) nach ungefähr sieben Tagen vom Beginn des zweiten Schrittes an; eine zweite Umwendung genannter Haufen (2) erfolgt etwa 15 Tage nach der ersten Umwendung; und eine dritte Umwendung besagter Haufen (2) erfolgt etwa 20 Tage nach der zweiten Umwendung; die Masse (1) wird nun ruhen gelassen für mindestens 15 Tage lang nach der dritten Umwendung; und der genannte dritte Teilschritt wird ungefähr 60 Tage gerechnet vom Beginn des zweiten Schrittes an gesetzt, wenn die Temperatur der Fermentationsmasse (1) sich bei einem konstanten Wert zwischen etwa 30 und 35°C stabilisiert.

2. Verfahren nach Anspruch 1, dadurch gekennzeichnet, daß es einen vierten Schritt umfaßt, in dem genannte Holzsplitter getrennt von besagtem Dünger mittels des dritten Teilschrittes zum Beginn des genannten ersten Schrittes zurückgeführt werden, um die biologische Impfmasse zu bilden, die irgendwelchen neuen Holzsplittern zugegeben wird, um das genannte mechanische Substrat zu bilden in dem Volumsverhältnis, das erforderlich ist im Hinblick auf jenes der Schlämme.

3. Verfahren nach Anspruch 2, dadurch gekennzeichnet, daß genanntes mechanisches Substrat beim Beginn des ersten Schrittes folgende Gewichtszusammensetzung hat: 1/4 Holzsplitter, erhalten aus Schnitzeln, hergestellt durch Zerhauen von Bäumen; 3/4 Holzsplitter gebildet durch die genannte Gewichtsfraktion, abgetrennt aus genanntem dritten Schritt und rückgeführt durch genannten vierten Schritt; besagtes mechanisches Substrat unterliegt während des genannten zweiten und dritten Schritts einem biologischen und mechanischen Angriff, der einen Gewichtsverlust an organischem Material von etwa 1/4 beinhaltet, der Verlust an organischem Material des genannten mechanischen Substrates geht zuerst in die genannten Fermentationsschlämme und dann in besagtes Düngemittel.

4. Verfahren nach einem der vorhergehenden Ansprüche, dadurch gekennzeichnet, daß genannte Holzsplitter aus hartem und/oder harzigem Holz, welches einen hohen Prozentsatz lignin enthält, erhalten worden sind und folgende Eigenschaften haben:

Dicke etwa 0,5 cm
Breite etwa 3 cm
Länge mahr als 5 cm

5. Verfahren nach einem der vorhergehenden Ansprüche, dadurch gekennzeichnet, daß genannte organische Schlämme Lignocellulose-Rückstände enthalten und folgende analytische Eigenschaften, die Feuchtigkeit ausgenommen, auf Trockenmaterial, berechnet, aufweisen:

|  | Min | Max |
|---|---|---|
| Feuchtigkeit | 50 | 85 |
| pH | 3,5 | 8,5 |
| Aschen % | 15 | 50 |
| Organisches Material % | 50 | 85 |
| Gesamtstickstoff % | 2 | 9 |
| Gesamtphosphor % | 0,5 | 2 |
| K % | 0,1 | — |
| Pb ppm | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe ppm | — | 5 |

6. Verfahren nach einem der vorhergehenden Ansprüche, dadurch gekennzeichnet, daß es einen fünften Schritt umfaßt, in welchem der genannte Dünger, erhalten nach genanntem dritten Schritt, getrocknet wird, um den Feuchtigkeitsgehalt des letzteren von 50% auf etwa 35% zu senken.

**Revendications**

1. Procédé de production d'un engrais organique pour l'agriculture par transformation biologique de boues résiduaires organiques d'origine domestique et d'origine industrielle, comprenant une première étape, dans laquelle ces boues sont mélangées à fond avec un substrat mécanique formé d'éclats de bois ayant une résistance élevée à l'attaque biologique et avec un inoculum biologique, une seconde étape de fermentation spontanée de la masse (1) obtenue dans la première étape, cette masse étant disposée en tas (2) et une troisième étape dans laquelle on tamise la masse fermentée (1) pour la séparer en deux constituants, l'un comprenant l'engrais organique pour l'agriculture et le second formé du substrat mécanique d'éclats de bois, procédé caractérisé en ce que le rapport en volume des boues aux éclats de bois dans la première étape est égal ou légèrement inférieur à 1; les tas ayant une hauteur comprise entre environ 2 et 4 m, une longueur supérieure ou égale à 10 m, une largeur supérieure ou égale à 3 m, et étant abrités des intempéries sur une aire ventilée à la température ambiante, la masse (1) étant ventilée périodiquement par un premier retournement des tas (2) environ 7 jours après le commencement de la seconde étape, un second retournement des tas (2) environ 15 jours après le premier retournement et un troisième retournement des tas (2) environ 20 jours après le second retournement, la masse (1) étant laissée au repos pendant au moins encore 15 jours après le troisième retournement, et la troisième étape étant effectuée environ 60 jours après le commencement de la seconde étape lorsque la température de la masse (1) en fermentation se stabilise à un niveau constant compris entre environ 30 et 35°C.

2. Procédé selon la revendication 1, caractérisé en ce qu'il comprend une quatrième étape, dans laquelle les éclats de bois séparés de l'engrais par la troisième étape sont recyclés vers le début de la première étape, pour constituer l'inoculum biologique, que l'on ajoute à des éclats de bois frais pour former le substrat mécanique dans le rapport de volume exigé par rapport à celui des boues.

3. Procédé selon la revendication 2, caractérisé en ce que le substrat mécanique a, au début de la première étape, la composition suivante en poids:

1/4 d'éclats de bois constitués par les fragments produits par le hâchage d'arbres;

3/4 d'éclats de bois formés par la fraction en poids séparée à la troisième étape et recyclés par la quatrième étape, le substrat mécanique étant soumis pendant la seconde et la troisième étapes à une attaque biologique et mécanique, qui provoque une perte de matière organique égale à environ 1/4 en poids, la matière organique perdue par le substrat mécanique allant d'abord dans les boues en fermentation et ensuite dans l'engrais.

4. Procédé selon l'une quelconque des revendications précédentes, caractérisé en ce que les éclats de bois sont obtenus à partir de bois durs et/ou de bois résineux ayant une teneur élevée en lignine et ont les propriétés suivantes:

— épaisseur environ 0,5 cm
— largeur environ 3 cm
— longueur supérieure à 5 cm.

5. Procédé selon l'une quelconque des revendications précédentes, caractérisé en ce que les boues organiques comprennent des résidus lignocellulosiques et ont les propriétés analytiques suivantes exprimées, sauf pour l'humidiité, par rapport à la matière sèche:

|  | Minimum | Maximum |
|---|---|---|
| Humidité | 50 | 85 |
| pH | 3,5 | 8,5 |
| Cendres % | 15 | 50 |
| Matière organique % | 50 | 85 |
| Azote total % | 2 | 9 |
| Phosphore total % | 0,5 | 2 |
| K % | 0,1 | — |
| Pb ppm | — | 500 |
| Ni ppm | — | 200 |
| Cr ppm | — | 500 |
| Cd ppm | — | 10 |
| Cu ppm | — | 1000 |
| Zn ppm | — | 2500 |
| Mn ppm | — | 1000 |
| Fe % | — | 5 |

6. Procédé selon l'une quelconque des revendications précédentes, caractérisé en ce qu'il comprend une cinquième étape dans laquelle on sèche l'engrais obtenu après la troisième étape afin d'abaisser la teneur en humidité de ce dernier d'environ 50% jusqu' à environ 35%.

**0 112 996**

Fig.1

Fig.2

1